# EUROPEAN PATENT APPLICATION

(11) **EP 1 666 192 A1**
(43) Date of publication of application: **07.06.2006**
(21) Application number: 05109451.4
(22) Date of filing: 11.10.2005
(51) Int. Cl.: B23K 35/36, B23K 35/02, B23K 9/173

(54) **Copper-free wires for gas-shielded arc welding**

(30) Priority: 03.12.2004 KR 2004101308
(71) Applicant: Kiswel Ltd., Sasang-gu, Busan 617-843 (KR)
(72) Inventor: KIM, Yong Chul, 641-120, Gyeongnam (KR); BANG, Hwan Cheol, 641-120, Gyeongnam (KR)
(74) Representative: Beck, Michael Rudolf

(57) **Abstract**

Disclosed herein is a copper-free wire for gas-shielded arc welding. The copper-free wire for gas-shielded arc welding comprises a flat worked surface, and depressions circumferentially formed in a negative direction (towards the center of the wire) to the said worked surface reference. The ratio (dr/di) of an actual length (dr) of a circular arc to an apparent length (di) of a circular arc is in the range of 1.015 ~ 1.515. An amount of lubricant remaining on the wire surface is 0.50 g/W. kg or less. The wire has 0.03 ~ 0.70 g/W. kg of a coating agent on the wire surface. The coating agent comprises at least one selected from the group consisting of liquid animal oil, vegetable oil, mineral oil, mixed oil, and synthetic oil. The wire is brought into stable contact with a contact tip during welding, which results in excellent arc stability and feedability, while lowering a spatter quantity.

## Description

### BACKGROUND OF THE INVENTION

### Field of the Invention

The present invention generally relates to copper-free wires for gas-shielded arc welding, and, more particular, to copper-free wires for gas-shielded arc welding, which ensure arc stability during semi-automatic or automatic welding to reduce the spatter quantity and enhance feedability.

### Description of the Related Art

Recently, with the developmemt of automated welding, application of wires for gas-shielded arc welding has rapidly increased, and as a result, the wires for gas-shielded arc have been widely employed particularly in the automobile industry, shipbuilding industry, building industry, and the like. As such, large quantities of welding wires are used in various fields as mentioned above, and are generally plated on their surfaces with copper in order to ensure properties of the wire, such as conductivity, feedability, rust resistance, and the like. When copper is plated on the wire surface, it is necessary to form a uniformly plated layer on the wire surface in order to ensure conductivity, feedability and rust resistance. If copper is non-uniformly plated on the wire surface, minute copper flakes are detached from the wire surface due to friction between the wire and a contact tip within the contact tip upon welding, and clogged into the contact tip, which is referred to as "tip clogging." Tip clogging results in unstable arc and feedability, and increases the spatter quantity. In addition to the above-mentioned problems, the copper-plated wire creates harmful wastewater during a plating process, thereby aggravating environmental pollution.

In order to solve such problems including environmental pollution, wires which are not plated with copper on the surface thereof, i.e. copper-free wires have been developed. For the copper-plated wire, a thin copper-plated layer enables the wire to be brought into stable contact with the contact tip, ensuring a relatively stable arc property. In this regard, it is necessary for the copper-free wire to have a surface layer with a particular property, which can replace the copper-plated layer, in order to ensure stable contact with the contact tip.

A number of references disclose a copper-free wire having a surface layer with such a particular property, including Japanese Patent Laid-open publication Nos. 2003-191092, 2003-225793, 2003-170293, and 2004-001061.

According to these conventional techniques, the wire is formed on the surface thereof with bottleneck-shaped depressions, which comprises an opening and an inner portion expanded inside the opening, and/or cave-shaped depressions extended into the surface layer of the wire, that is, cave-shaped pits comprising a portion which is not illuminated by virtual incident light from the outside. The pits serve to stably hold a powdered functional coating agent, which must be present on the wire surface in order to ensure arc stability and feedability. Additionally, polyisobutene oil is used in conjunction with an assistant means for stably holding the powdered functional coating agent.

The inventors have investigated to solve the problems of the conventional techniques as described above, and found that, since it is substantially impossible to uniformly control a size(volume) of the bottleneck-shaped or cave-shaped pits (depressions), i.e. an inner volume of the depressions, as disclosed in the conventional techniques, it is impossible to uniformly apply the functional coating agent to the wire surface in a circumferential direction of 360 degrees, using only pits such as the bottleneck-shaped or cave-shaped pits, and a ratio of a length of the portion where the virtual incident light from the outside does not reach. Accordingly, with the conventional techniques, the powdered functional coating agent is clogged into a conduit cable and the contact tip upon welding for a long time, causing feeding instability. Furthermore, clogging of the powdered functional coating agent interrupts stable contact between the contact tip and the wire, causing arc instability, thereby increasing the spatter quantity. In particular, the conventional techniques have a problem in that due to resistance heat and radiant heat during welding, the functional coating agent is fused and adhered to the contact tip, or by-products thereof clog the contact tip. Additionally, the bottleneck-shaped or the cave-shaped pits (depressions) are difficult to degrease after final drawing, increasing a remaining amount of lubricant.

### SUMMARY OF THE INVENTION

The present invention has been made to solve the above problems, and it is an object of the present invention to provide a copper-free wire for gas-shielded arc welding, engineered to have a particular property on the wire surface to stably contact a contact tip without a copper-plated layer on the wire surface, so that copper flakes are not clogged into a conduit cable and the contact tip upon welding for a long time, thereby ensuring arc stability during semi-automatic or automatic welding to reduce the spatter quantity and stabilize feedability.

In accordance with one aspect of the present invention, the above and other objects can be accomplished by the provision of a copper-free wire for gas-shielded arc welding, comprising: a flat worked surface; and depressions circumferentially formed in a negative direction (towards the center of the wire) to the said worked surface reference, wherein a ratio (dr/di) of an actual length (dr) of circular arc to an apparent length (di) of circular arc is in the range of 1.015 - 1.515.

The wire may have 0.50 g/W. kg (g per kg of wire) or less of lubricant remaining on the wire surface.

The wire may have 0.03 - 0.70 g/W. kg of coating agent on the wire surface.

The coating agent may comprise at least one selected from the group consisting of liquid animal oil, vegetable oil, mineral oil, mixed oil, and synthetic oil.

### BRIEF DESCRIPTION OF THE DRAWINGS

The foregoing and other objects and features of the present invention will be more clearly understood from the following detailed description taken in conjunction with the accompanying drawings, in which:
Figs. 1 and 2 are scanning electron microscope (SEM) micrographs, showing the surface of a wire, which is not existence of worked surface;
Figs. 3 and 4 are SEM micrographs, showing the surface of a wire, which is entirely existence of worked surface;
Figs. 5 and 6 are SEM micrographs, showing the surface of a wire in accordance with the present invention, which has a worked surface and depressions formed into the surface in a negative direction (toward the center of the wire) to the said worked surface reference;
Fig. 7 is an SEM micrograph, showing an image for measuring a length (ℓ) of a chord to calculate an apparent length (di) of a circular arc;
Fig. 8 is a view depicting the relationship between a length (ℓ) of a chord, a radius r of the wire, an inner angle θ of a circular arc, and an apparent length di of the circular arc; and
Figs. 9 and 10 are SEM micrographs, showing images before and after measuring an actual length of a circular arc using an image analyzing system.

### DESCRIPTION OF THE PREFERRED EMBODIMENTS

Preferred embodiments will now be described in detail with reference to the accompanying drawings.

As described in the above description, even though it is necessary for a copper-free wire to have a particular property on the surface thereof in order to enable the wire to come into stable contact with a contact tip, the conventional techniques have suggested methods for imparting the following property thereto, which are limited to controlling surface roughness, a specific surface area, and the like within a predetermined range on the wire surface, and thus cannot ensure stable contact between the contact tip and the wire.

The inventors have performed various experiments to provide the particular property to the wire surface so as to replace the copper-plated layer of the wire surface. As a result, the inventors have found that the wire surface can be classified into three types, i.e. a flat surface consisting only of a worked surface (herein, the term "worked surface" means a flat portion circumferentially formed on the wire surface by dies upon drawing, when viewing an image of a cross section in a direction of 90 degrees to a length of the wire, which is magnified 1,000 times by an SEM), an irregular surface ( 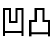 ) which does not have the worked surface, and a combined surface comprising the worked surface and depressions circumferentially formed on the worked surface in a negative direction (toward the center of the wire) to the said worked surface reference, and that, when the wire has the combined surface under the condition that a ratio (dr/di) of an actual length (dr) of a circular arc to an apparent length (di) of a circular arc is in the range of 1.015 - 1.515, the wire provides excellent arc stability and weldability while reducing lubricant remaining on the wire surface. Here, the actual length of a circular arc means a value obtained by measuring an actual length of a circular arc corresponding to a measured area on an image magnified 1,000 times by the SEM for the cross section in the direction of 90 degrees to the length of the wire (that is, sum of a circumference of a depression and a length of the worked surface) using an image analyzing system. The apparent length of a circular arc means a value obtained by theoretically calculating a length of a circular arc corresponding to the measured area on the image using an actual diameter of the wire to be tested, and a calculating method thereof will be descried below.

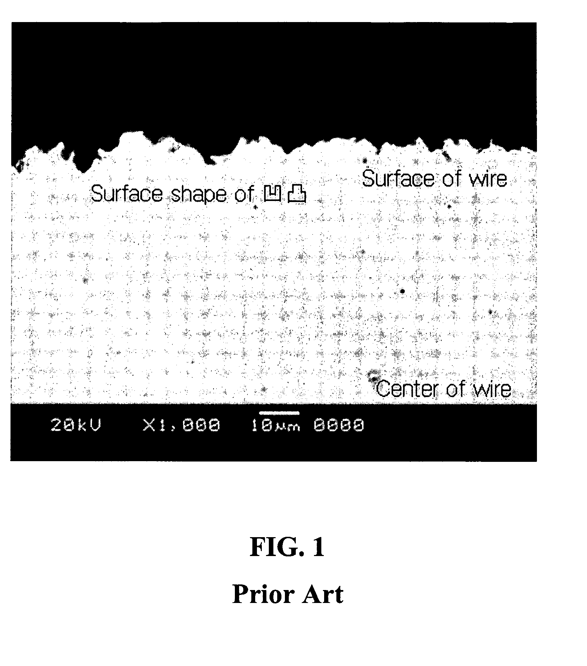

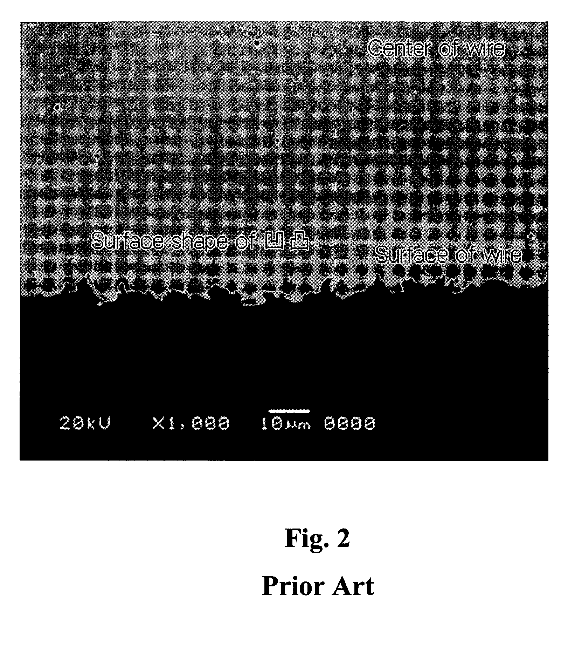

The irregular surface refers to a surface which does not have the worked surface, as shown in Figs. 1 and 2. Meanwhile, according to the conventional techniques as disclosed in Japanese Patent Laid-open Nos. 2003-191092, 2003-225793, 2003-170293, and 2004-001061, the wire is formed on the surface thereof with bottleneck-shaped and/or cave-shaped pits, each of which comprises an opening and an inner portion expanded into the opening, which corresponds to the irregular surface according to the classification of the invention.

Although such an irregular surface can provide excellent capability of holding a coating agent or a functional coating agent on the wire surface, stable contact between the contact tip and the wire is not ensured due to lack of the worked surface, as well as increasing a feeding load due to friction within a feeding cable upon welding, resulting in deterioration of feedability. Additionally, the irregular surface is difficult to degrease after final drawing, increasing a remaining amount of lubricant on the wire surface.

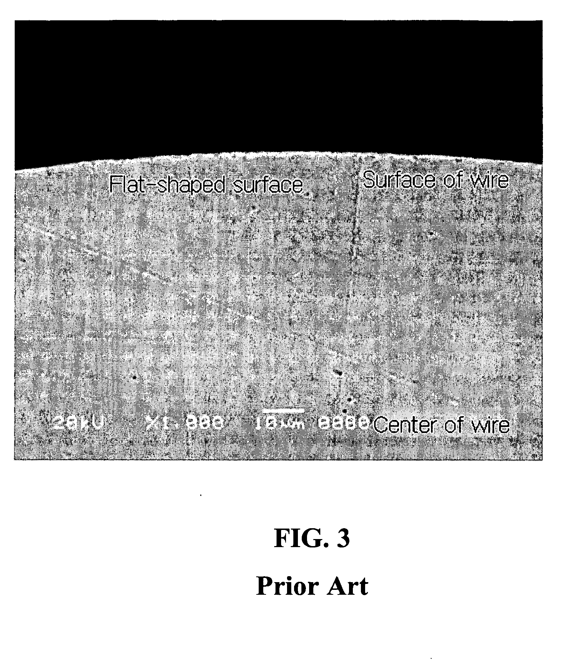

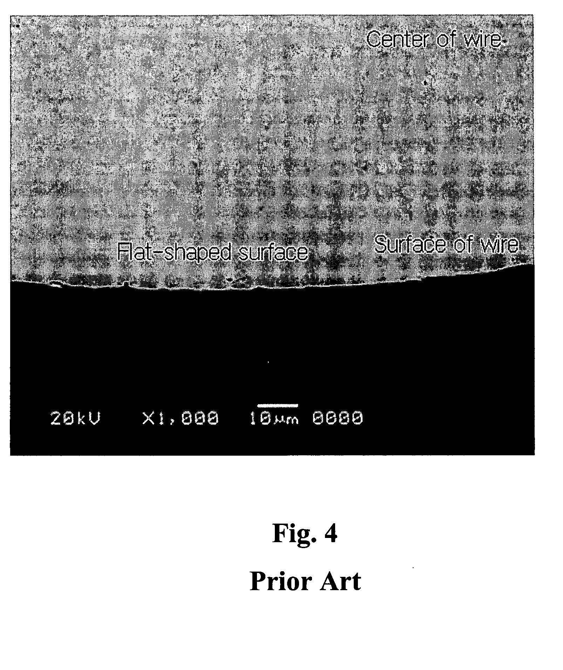

As shown in Figs. 3 and 4, since the flat surface has only the worked surface, it can ensure stable contact between the contact tip and the wire. However, the flat surface is deteriorated in capability of holding the coating agent or the functional coating agent, resulting in deterioration of feedability due to insufficient lubrication.

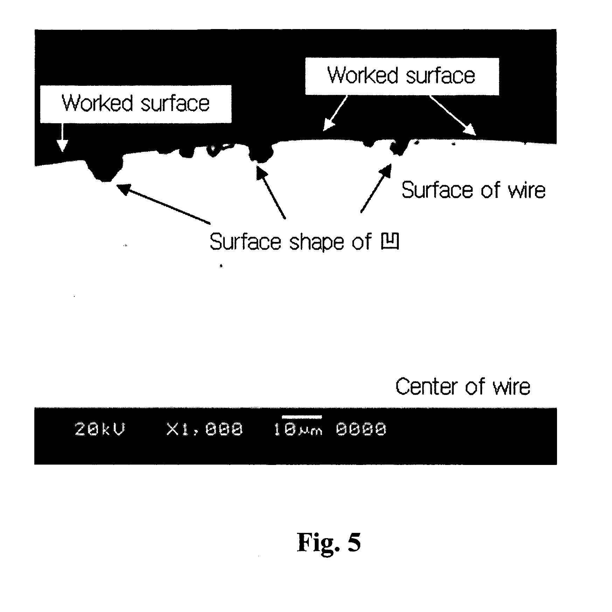

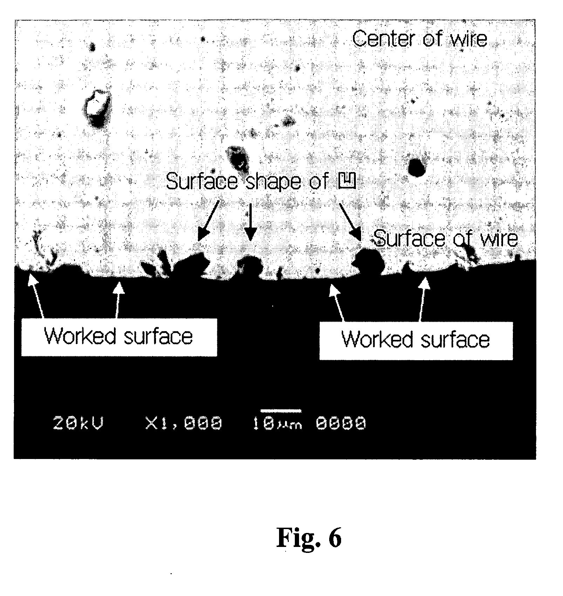

On the contrary, as shown in Figs. 5 and 6, the combined wire surface according to the invention has the flat worked surface, and the depressions circumferentially formed into the wire surface in the negative direction (toward the center of the wire) to the said worked surface reference when viewing the cross section of the wire in the direction of 90 degrees to the length of the wire, instead of the irregular ( 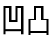 ) or protruded ( 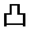 ) surface. When the wire has such a combined surface, it is possible to ensure stable contact between the contact tip and the wire upon welding. Additionally, when a ratio of a total length of the worked surface to a length of the wire circumferentially measured within a predetermined range is in a suitable range, it is possible to stabilize arc, thereby reducing spatter generation.

However, even if the ratio of the total length of the worked surface is controlled in the suitable range, there is a limitation in effective reduction of the spatter quantity upon welding. In other words, since an increased amount of remaining lubricant causes an increase of the spatter quantity upon welding, it is impossible to solve the problems caused by the remaining amount of lubricant due to depth, volume and shape of the depressions only by controlling the ratio of the total length of the worked surface to be in the suitable range.

Thus, according to the invention, the wire has the combined surface which comprises the worked surface and the depressions circumferentially formed into the wire surface in the negative direction (towards the center of the wire) to the said worked surface reference under the condition that a ratio (dr/di) of an actual length (dr) of a circular arc to an apparent length (di) of a circular arc is in the range of 1.015 ~ 1.515.

Meanwhile, it is impossible in practice to achieve a condition wherein the ratio (dr/di) of the actual length of a circular arc to the apparent length of a circular arc is less than 1.015, and, under this condition, the wire comprises only the worked surface like the flat surface. In this case, although stable contact between the contact tip and the wire can be ensured, the capability of holding the coating agent or the functional coating agent is deteriorated. As a result, sufficient lubrication cannot be secured, deteriorating feedability. If the ratio (dr/di) of the actual length of a circular arc to the apparent length of a circular arc exceeds 1.515, the wire surface is roughened, ensuring excellent capability of holding the coating agent. However, in this case, stable contact between the contact tip and the wire cannot be ensured due to lack of the worked surface, and the feeding load is increased due to friction within the feeding cable upon welding, resulting in deterioration of feedability. Meanwhile, if the ratio (dr/di) of the actual length of a circular arc to the apparent length of a circular arc is in the range of 1.015 ~ 1.515, the wire has the flat surface together with a sufficient worked surface, and an inner volume of the depressions corresponding to the bottleneck shape or the cave shape is decreased, so that the amount of lubricant remaining on the wire surface is decreased. Thus, it is possible to secure stable contact between the contact tip and the wire, and to reduce the amount of lubricant remaining on the surface, thereby remarkably reducing the spatter quantity.

According to the invention, the amount of lubricant remaining on the wire surface is 0.50 g or less per kg of the wire. If the amount of lubricant remaining on the wire surface is above 0.50 g/W.kg, a plenty of spatter occurs during welding, and deteriorates arc stability.

It is desirable that the lubricant used for drawing be completely removed after final drawing. As for a degreasing method, mechanical degreasing, alkaline degreasing, electrolytic degreasing and the like are generally performed. The amount of lubricant remaining on the wire surface depends on the shapes of the depressions on the wire surface as well as the degreasing method. In particular, for the depressions with a high depth or with the bottleneck shape or cave shape, it is very difficult to remove the lubricant from the wire surface.

In this regard, if the ratio (dr/di) of the actual length of a circular arc to the apparent length of a circular arc is in the range of 1.015 - 1.515, it is possible to maintain the remaining amount of lubricant to 0.50 g/W.kg or less. However, when the ratio (dr/di) exceeds 1.515, it is difficult to lower the remaining amount of lubricant to 0.50 g/W.kg or less in an in-line system even if electrolytic degreasing is performed.

Moreover, according to the invention, the wire has a 0.03 - 0.70 g/W.kg of a coating agent on the wire surface. The coating agent acts to provide stable feedability to the wire, thereby further enhancing arc stability.

If the amount of a coating agent is less than 0.03 g/W.kg, sufficient lubrication cannot be ensured due to the excessively low amount of the coating agent, deteriorating the feedability. On the contrary, if the amount of a coating agent exceeds 0.70 g/W.kg, feedability is deteriorated due to a slip phenomenon within a feeder section during welding.

According to the invention, the coating agent is preferably at least one selected from the group consisting of animal oil, vegetable oil, mineral oil, mixed oil, and synthetic oil. In this regard, when using a powdery coating agent, the powdery coating agent is clogged into the conduit cable and the contact tip after extended periods of welding. However, when using an oily coating agent, clogging of the coating agent can be avoided, thereby further stabilizing the arc while more effectively reducing the spatter quantity.

Hereinafter, a method will be described of forming a wire comprising a flat worked surface, and depressions circumferentially formed into the wire surface in a negative direction (toward the center of the wire) to the said worked surface reference, instead of the irregular surface ( 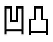 or 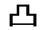 ), when viewing the surface of a cross section in the direction of 90 degrees to a length of the wire, such that the ratio (dr/di) of the actual length (dr) of a circular arc to the apparent length (di) of a circular arc is in the range of 1.015 - 1.515.

First, in order to secure the shape of the worked surface and the said ratio of dr/di according to the invention, the surface roughness before drawing, that is, the surface roughness of an original rod, which will be subjected to drawing, must be adjusted 0.40 µm (Ra standard) and below. This can be obtained through an acid pickling with hydrochloric acid, sulfuric acid, and the like, or a polishing process after mechanical descaling.

Next, an appropriate combination of a drawing method and a drawing rate must be secured. As for the drawing method, in-line drawing may be performed via all dry drawing (which will be referred to as "DD"), all cassette roller-die drawing (which will be referred to as "CRD"), or CRD + DD combination. Alternatively, two-stage drawing may be performed via DD (primary drawing)-skin pass (which will be referred to as "SP") (secondary drawing), DD (primary drawing)-wet drawing (which will be referred to as "WD") (secondary drawing), CRD (primary drawing)-SP (secondary drawing) or CRD (primary drawing)-WD (secondary drawing).

For the in-line drawing, the drawing rate must be controlled to 1,000 m/min or less, and for the two-stage drawing, the drawing rate must be controlled such that, as the primary drawing rate increases, the secondary drawing rate decreases.

Lastly, the final wire must be worked to have a surface roughness in the range of 0.10 ~ 0.25 µm (Ra standard) by appropriately adjusting the roughness of the original rod, the drawing method, and the drawing rate.

An example of the invention will be described as follows.

Table 1 shows the surface roughness of the final wire obtained according to various surface roughness of an original rod, drawing methods, and drawing rates. At this time, when drawing the original rod, dies with hole were used except for the CRD. In order to provide the final wire with a surface roughness in the range of 0.10 - 0.25 µm (Ra standard), the following conditions were required. That is, the surface roughness of the original rod had to be adjusted to 0.40 µm or less (Ra standard). Additionally, for the in-line drawing, the drawing rate was controlled to 1,000 m/min or less whether the DD, the CRD, or the combination thereof was used, and for two-stage drawing, the drawing rate is adjusted such that as the primary drawing rate increases the secondary drawing rate decreases. For example, when the primary drawing rate was in the range of 1,000 ~ 1,500 m/min, the secondary drawing rate was 400 m/min or less, and when the primary drawing rate was in the range of 500 - 1,000 m/min, the secondary drawing rate was 600 m/min or less. Exceptionally, as can be seen from comparative example No. 18 in Table 1, a primary drawing rate of 500 m/min or less and a secondary drawing rate of 200 m/min or less, which is an excessively low rate, resulted in a surface roughness of 0.10 µm or less (Ra standard) after drawing. As a result, it can be appreciated that a suitable combination of the drawing rates is required.

**Table 1**

| Sample No. | Roughness before drawing (µm) | Drawing method | Drawing rate(m/min) | | Roughness after drawing (µm) |
|---|---|---|---|---|---|
| | | | Primary drawing | Secondary drawing | |
| CE 1 | 0.61 | DD, CRD, CRD+DD | >1500 | - | 0.35 |
| CE 2 | 0.54 | | >1500 | - | 0.46 |
| CE 3 | 0.47 | | >1500 | - | 0.45 |
| CE 4 | 0.41 | | >1500 | - | 0.33 |
| CE 5 | 0.35 | | > 1000~1500 | - | 0.31 |
| CE 6 | 0.36 | | > 1000~1500 | - | 0.42 |
| CE 7 | 0.31 | | > 1000~1500 | - | 0.27 |
| CE 8 | 0.40 | | > 1000~1500 | - | 0.37 |
| IE 1 | 0.32 | | 500~1000 | - | 0.21 |
| IE 2 | 0.35 | | 500~1000 | - | 0.25 |
| IE 3 | 0.33 | | 500~1000 | - | 0.22 |
| IE 4 | 0.34 | | 500~1000 | - | 0.24 |
| IE 5 | 0.40 | | < 500 | - | 0.24 |
| CE 9 | 0.39 | | < 500 | - | 0.19 |
| IE 6 | 0.37 | | < 500 | - | 0.20 |
| IE 7 | 0.29 | | < 500 | - | 0.15 |
| CE 10 | 0.38 | DD(PD)+SP(SD), DD(PD)+WD(SD), CRD(PD)+SP(SD), CRD(PD)+WD(SD) | > 1500 | > 600 | 0.35 |
| CE 11 | 0.35 | | > 1500 | 400~600 | 0.37 |
| CE 12 | 0.33 | | > 1500 | 200-400 | 0.24 |
| IE 8 | 0.38 | | > 1500 | < 200 | 0.24 |
| CE 13 | 0.40 | | > 1500 | < 200 | 0.25 |
| CE 14 | 0.42 | | > 1000~1500 | > 600 | 0.36 |
| CE 15 | 0.41 | | > 1000~1500 | 400~600 | 0.33 |
| IE 9 | 0.35 | | > 1000~1500 | 200-400 | 0.22 |
| IE 10 | 0.37 | | > 1000~1500 | 200-400 | 0.20 |
| IE 11 | 0.38 | | > 1000~1500 | < 200 | 0.15 |
| IE 12 | 0.34 | | > 1000~1500 | < 200 | 0.22 |
| CE 16 | 0.46 | | 500~1000 | > 600 | 0.31 |
| IE 13 | 0.39 | | 500~1000 | 400-600 | 0.21 |
| IE 14 | 0.33 | | 500~1000 | 200-400 | 0.24 |
| IE 15 | 0.39 | | 500~1000 | 200~400 | 0.23 |
| IE 16 | 0.34 | | 500~1000 | < 200 | 0.19 |
| IE 17 | 0.28 | | 500~1000 | < 200 | 0.16 |
| CE 17 | 0.37 | | < 500 | > 600 | 0.27 |
| TE 18 | 0.37 | | < 500 | 400~600 | 0.25 |
| IE 19 | 0.32 | | < 500 | 200-400 | 0.18 |
| IE 20 | 0.30 | | < 500 | 200-400 | 0.24 |
| CE 18 | 0.29 | | < 500 | < 200 | 0.09 |

| | | | | | |
|---|---|---|---|---|---|
| Note: CE = comparative example, IE = Inventive example, PD = Primary drawing, SD = Secondary drawing | | | | | |

Table 2 shows the results of measurement of a surface shape of a cross section of the wire samples, a ratio (dr/di) of an actual length (dr) of a circular arc to an apparent length (di) of a circular arc, a remaining amount of lubricant, an amount of a coating agent, and feedability and arc stability of respective wire samples, each of which are measured for the wires obtained in Table 1.

**Table 2**

| Sample No. | Surface Shape | dr/di | Remaining lubricant (g/W.Kg) | Coating agent (g/W.Kg) | Feedability | Arc stability |
|---|---|---|---|---|---|---|
| CE 1 | 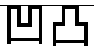 | 1.529 | 0.64 | 0.33 | X | X |
| CE 2 | 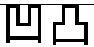 | 1.536 | 0.66 | 0.12 | X | X |
| CE 3 | 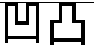 | 1.545 | 0.75 | 0.03 | X | X |
| CE 4 | 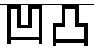 | 1.519 | 0.52 | 0.24 | X | X |
| CE 5 | 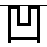 | 1.521 | 0.57 | 0.42 | Δ | X |
| CE 6 | 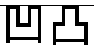 | 1.541 | 0.72 | 0.02 | X | X |
| CE 7 | 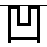 | 1.516 | 0.55 | 0.35 | Δ | X |
| CE 8 | 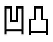 | 1.533 | 0.68 | 0.01 | X | X |
| IE 1 | 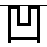 | 1.515 | 0.49 | 0.56 | O | O |
| IE 2 | 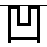 | 1.479 | 0.50 | 0.70 | O | O |
| IE 3 | 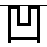 | 1.467 | 0.44 | 0.45 | O | O |
| IE 4 | 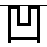 | 1.415 | 0.41 | 0.37 | O | O |
| IE 5 | 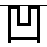 | 1.366 | 0.42 | 0.22 | O | O |
| CE 9 | 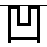 | 1.295 | 0.37 | 0.75 | Δ | O |
| IE 6 | 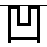 | 1.325 | 0.35 | 0.15 | O | O |
| IE 7 | 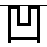 | 1.221 | 0.34 | 0.09 | O | O |
| CE10 | 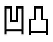 | 1.558 | 0.82 | 0.21 | X | X |
| CE11 | 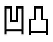 | 1.524 | 0.71 | 0.35 | X | X |
| CE12 | 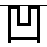 | 1.518 | 0.54 | 0.41 | O | X |
| IE 8 | 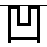 | 1.154 | 0.31 | 0.31 | O | O |
| CE13 | 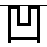 | 1.517 | 0.53 | 0.52 | O | X |
| CE14 | 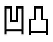 | 1.602 | 0.85 | 0.33 | X | X |
| CE15 | 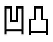 | 1.534 | 0.61 | 0.34 | X | X |
| IE 9 | 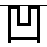 | 1.181 | 0.38 | 0.47 | O | O |
| IE10 | 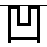 | 1.289 | 0.39 | 0.61 | O | O |
| IE11 | 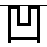 | 1.023 | 0.30 | 0.03 | O | O |
| IE12 | 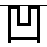 | 1.310 | 0.33 | 0.11 | O | O |
| CE16 | 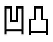 | 1.518 | 0.52 | 0.45 | X | X |
| IE13 | 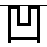 | 1.016 | 0.28 | 0.64 | O | O |
| IE14 | 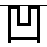 | 1.027 | 0.36 | 0.55 | O | O |
| IE15 | 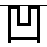 | 1.382 | 0.42 | 0.28 | O | O |
| IE16 | 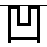 | 1.021 | 0.33 | 0.42 | O | O |
| IE17 | 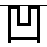 | 1.261 | 0.29 | 0.18 | O | O |
| CE17 | 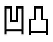 | 1.519 | 0.54 | 0.54 | X | X |
| IE18 | 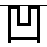 | 1.026 | 0.21 | 0.38 | O | O |
| IE19 | 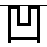 | 1.015 | 0.28 | 0.05 | O | O |
| IE20 | 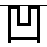 | 1.018 | 0.32 | 0.07 | O | O |
| CE18 | FL | 1.013 | 0.09 | 0.20 | Δ | O |

| | | | | | | |
|---|---|---|---|---|---|---|
| Note: CE = comparative example, IE = Inventive example, FL = Flat surface | | | | | | |

The shapes of the wire surface were determined from an image of a cross section of the wire samples taken vertically to the length of the wire samples and magnified 1,000 times by the SEM, in which mark " 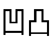 " indicates an irregular surface, which does not have a worked surface, mark " 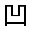 " indicates a combined surface according to the invention, which comprises the worked surface and depressions circumferentially formed into the wire surface in a negative direction (towards the center of the wire) to the said worked surface reference, and "FL" indicates a flat surface consisting only of the worked surface. As can be seen in Table 2, the combined surface of the invention is obtained for the wire samples having a surface roughness in the range of 0.10 - 0.25 µm (Ra standard) among the wires of Table 1.

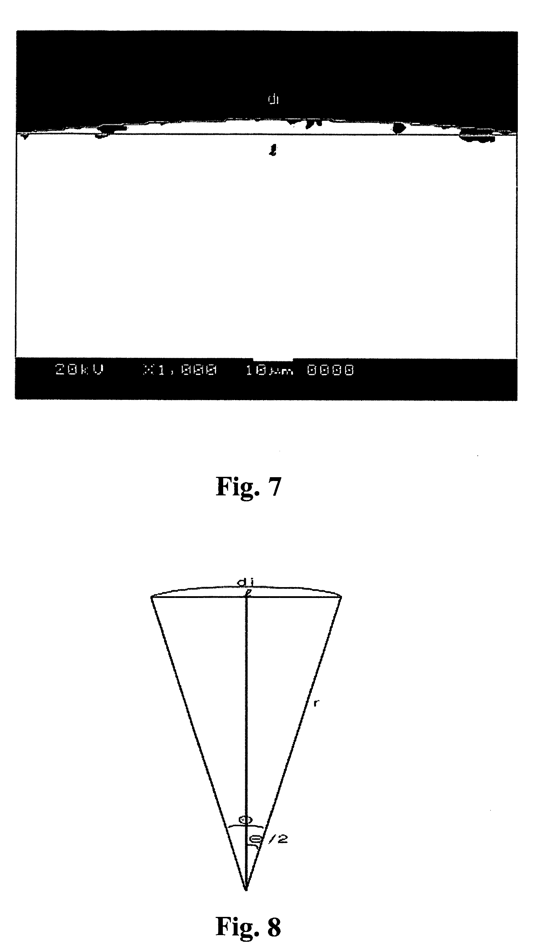

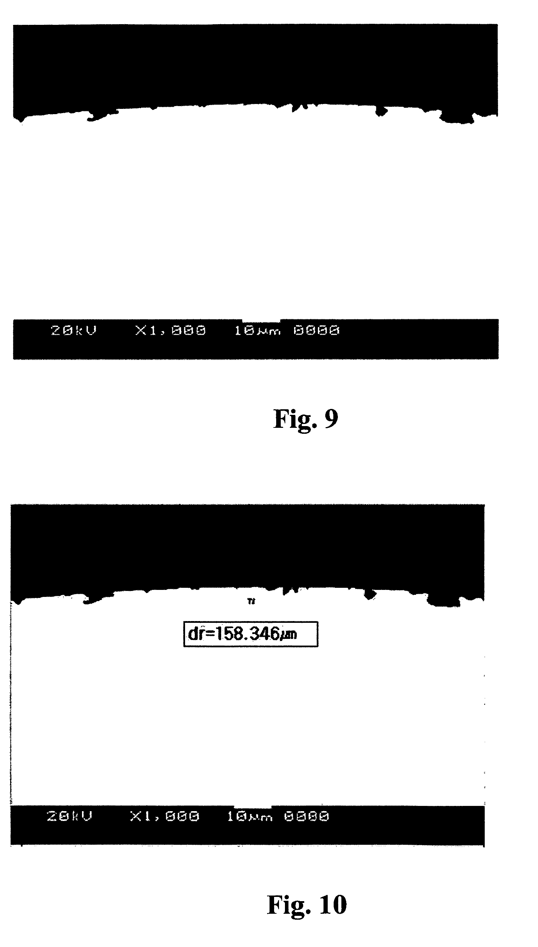

The ratio (dr/di) of the actual length (dr) of a circular arc to the apparent length (di) of a circular arc was obtained as follows. First, the actual length (dr) of a circular arc of the wire was measured under a magnification of 1,000 times using an image analyzing system (Image-pro plus 4.5, Media cybernetics). At this time, the actual length of a circular arc obtained using the image analyzing system corresponds to a sum of a circumference of depressions on the wire surface and a length of the worked surface. Figs. 9 and 10 are SEM micrographs, showing images before and after measuring the actual length of a circular arc using the image analyzing system. Next, a length (ℓ) of a chord in a measured section of the wire samples was measured under the magnification of 1,000 times using the image analyzing system in order to obtain the apparent length (di) of a circular arc. Fig. 7 is an SEM micrograph, showing an image for measuring a length (ℓ) of a chord to calculate the apparent length (di) of a circular arc. After obtaining a length (ℓ) of a chord, and as can be seen, an inner angle θ (radian) of a circle defined by a radius r of the wire to a length (ℓ) of a chord was obtained using the trigonometric function. As a result, the apparent length (di) of a circular arc is obtained using the inner angle through the equation: Radius r of the wire x inner angle θ of the circle. Thus, the apparent length (di) of a circular arc can be calculated using the radius r obtained by measuring an actual diameter of the wire.

Actual measurement using the image analyzing system was preformed as described below. First, final wire samples were produced, and removed of contaminants on the wire surface through ultrasonic cleaning in an organic solvent. The wire samples were heated at 400 °C for 2 - 3 hours, thereby forming an oxidized coating on the wire surface. Subsequently, each of the wire samples having the oxidized coating thereon was subjected to a mounting process using a thermosetting resin such that a cross section of the wire sample vertical to the length of the wire sample can be seen above the top surface of the thermosetting resin surrounding the wire sample, followed by polishing the wire sample. Finally, the polished cross section of each wire sample was observed using back scattering electrons of the SEM to observe a surface shape of the cross section of the wire samples, and then the apparent length of a circular arc and the actual length of a circular arc were measured using the image analyzing system to calculate dr/di. At this time, the magnification was 1,000 times.

An applied amount of a coating agent was measured according to the following method.
1. Preparing wire samples having a length of 6 - 8 cm and a weight of about 50 - 80 g.
2. Placing 1,000 ml of a solvent, CCl₄, in a beaker.
3. Measuring a weight (Wb) of each wire sample before degreasing on 1g/10,000 scales.
4. Immersing each wire sample into the beaker containing CCl₄, and degreasing the wire sample for 10 minutes while stirring the wire sample two or three times.
5. Drying the degreased wire sample for 10 minutes within a dry oven, and cooling the wire sample to room temperature in a desiccator.
6. Measuring a weight (Wa) of the dried wire sample on 1g/10,000 scales.
7. Calculating the applied amount of the coating agent with measured values of Wb and Wa according to the following equation: applied amount of the coating agent (g/W.kg) = {(Wb-Wa)/Wa}x1000

A remaining amount of lubricant on the wire samples was measured according to the following method.
1. Processes the same as items 1 to 6 of the method for measuring the applied amount of a coating agent were performed.
2. A weight Wa of each wire sample in the above Item 6 was defined as a weight Wb' of the wire sample before degreasing.
3. Immersing prepared wire samples into 5 % chromic anhydride (CrO₃) solution at 70 °C for 20 minutes.
4. Cleaning each degreased wire sample with alcohol after hot rinsing.
5. Drying the wire sample cleaned with alcohol for 10 minutes within the dry oven, and cooling the wire sample to room temperature in the desiccator.
6. Measuring a weight (Wa') of the dried wire sample after degreasing on 1g/10,000 scales.
7. Calculating a remaining amount of lubricant on the wire sample with Wb' and Wa' according to the following equation: remaining amount of lubricant (g/W.kg) = {(Wb'-Wa')/Wa'}x1000

A method of evaluating arc stability and feedability will be described as follows.

A straight feeding cable having a length of 3 m was used for evaluating the arc stability, and Table 3 shows welding conditions for evaluating the arc stability.

**Table 3**

| Welding conditions for evaluating arc stability | | Welding position |
|---|---|---|
| Current(A): 210 | Voltage(V): 23 | Bead on plate |
| Welding speed(cm/min): 100 | Welding time(sec): 15 | |
| Gas C0₂100% | Gas flow(1/min): 20 | |

According to evaluation results of the arc stability, when an amount of spatter having a diameter of 1 mm or more exceeds 0.2 g or the total amount of spatter exceeds 2 g, the arc stability was given a poor evaluation, which is indicated by an "x" in the table, and when the amount of the spatter is below the value as mentioned above, the arc stability was given an excellent evaluation, which is indicated by an "O" in the table. Wires used for evaluating the arc stability were JIS Z 3312 YGW 12 (AWS A5.18 ER70S-6) 1.2 mm.

A new feeding cable having a length of 5 m and wound two times (ring shape) to a diameter of 300 mm was used for evaluating the feedability, and Table 4 shows the welding conditions for evaluating the feedability.

**Table 4**

| Welding conditions for evaluating feedability | | Welding position |
|---|---|---|
| Current(A): 420 Welding speed(cm/min): 50 | Voltage(V): 44 Welding time(sec): - | Bead on plate, Zigzag weaving |
| Gas CO₂ 100% | Gas flux (1/min): 20 | |

According to evaluation results of the feedability, when a continuous welding time was less then 80 sec, feeding was not smoothly performed, resulting in failure of welding, and the feedability was given a poor evaluation, which is indicated by an "x" in the table. When the continuous welding time was 100 sec or more, the feedability was given a good evaluation, which is indicated by an "O" in the table, and when the continuous welding time is in the range of 80 - 100 sec, the feedability was given a normal evaluation, which is indicated by an "△" in the table. Wire samples used for evaluating the feedability were also JIS Z 3312 YGW 12 (AWS A5.18 ER70S-6) 1.2 mm.

Although the wire samples for the tests of the invention were JIS Z 3312 YGW12 (AWS A5.18 ER70S-6) 1.2 mm, JIS YGW 11, 14, 15, 16, 18 and 21 wires also provided the same results.

As can be appreciated from Table 2, in comparative examples 1 - 3, 4, 10, 11, and 14 - 17 (including high speed drawing of the secondary drawing), the wire samples have a surface shape of 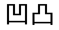 on a cross section due to high speed drawing, thereby providing poor feedability and arc stability even with an amount of the coating agent which is in the range of the invention. Additionally, a ratio of dr/di of the wire samples exceeds the range of the invention, and a remaining amount of lubricant also exceeds the range of the invention, increasing a spatter quantity. That is, unstable arc occurred. In Comparative examples 5, 7, 12, and 13, the wire samples have a surface shape of 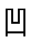 on a cross section thereof together with an amount of the coating agent in the range of the invention due to stable drawing conditions, providing marginally good feedability. However, a ratio of dr/di of the wire samples exceeds the range of the invention, so that a ratio of the others' surface to the worked surface is increased. As a result, unstable contact between the contact tip and the wire samples occurs upon welding, and at the same time, the remaining amount of lubricant is increased, thereby increasing a spatter quantity. In particular, as can be seen from Table 2, in comparative examples 5, 7, 12, and 13, even though the surface roughness of the wire samples before or after drawing is in the range of the invention, since the drawing rate is not suitably controlled, a ratio of dr/di of the wire samples exceeds the range of the invention. In Comparative example 6 and 8, the wire samples have not only a surface shape of 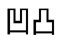 on a cross section thereof due to high speed drawing, but also an amount of the coating agent deviating from the range of the invention, providing poor feedability and arc stability. Additionally, the wire samples have a ratio of dr/di and a remaining amount of lubricant exceeding the range of the invention, increasing a spatter quantity. In Comparative example 9, the wire sample has a surface shape of 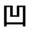 on a cross section thereof together with a ratio of dr/di and a remaining amount of lubricant within the range of the invention due to stable drawing conditions, thereby providing good arc stability. However, the wire sample has an amount of the coating agent exceeding the range of the invention, causing slippage in a feeder section upon welding, and thus feedability is not secured. In Comparative example 18, the wire sample has a flat surface on a cross section thereof, thereby providing stable contact between the contact tip and the wire sample to ensure the arc stability. However, even though the wire sample has an amount of the coating agent within the range of the invention, slippage occurs in the feeder section upon welding due to the flat surface of the wire, failing to ensure the feedability.

In inventive examples 1 - 20, it is possible to provide wire samples with surface shapes on a cross section thereof, which comprise a worked surface and depressions 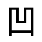 circumferentially formed in a negative direction (towards the center of the wire) to the said worked surface reference by optimally adjusting surface roughness before and after drawing, drawing method, and drawing rate so as to be in the range of the invention. Additionally, the wire samples have ratios (dr/di) of an actual length (dr) of a circular arc to an apparent length (di) of a circular arc and remaining amounts of lubrication in the range of the invention, thereby reducing a spatter quantity. Additionally, the wire samples have amounts of a coating agent which are adjusted in the range of 0.03 - 0.70 g/W.kg, thereby satisfying both feedability and arc stability.

As apparent from the description, according to the present invention, the copper-free wire for gas-shielded welding can be brought into stable contact with the contact tip without the copper-plated layer on the surface of the wire, so that powder is not clogged into the conduit cable and the contact tip upon welding for a long time, thereby providing excellent arc stability, which results in stable feedability and lowered a spatter quantity.

It should be understood that the embodiments and the accompanying drawings have been described for illustrative purposes and the present invention is limited by the following claims. Further, those skilled in the art will appreciate that various modifications, additions and substitutions are allowed without departing from the scope and spirit of the invention as set forth in the accompanying claims.

## Claims

1. A copper-free wire for gas-shielded arc welding, comprising:
a flat worked surface; and depressions circumferentially formed in a negative direction (towards a center of the wire ) to the said flat worked surface reference, wherein a ratio (dr/di) of an actual length (dr) of a circular arc to an apparent length (di) of a circular arc is in the range of 1.015 - 1.515.

2. The copper-free wire as set forth in claim 1, wherein the wire has 0.50 g/W.kg (g per kg of wire) or less of lubricant remaining on the wire surface.

3. The copper-free wire as set forth in claim 1 or 2, wherein the wire has 0.03 ~ 0.70 g/W.kg of a coating agent on the wire surface.

4. The copper-free wire as set forth in claim 3, wherein the coating agent comprises at least one selected from the group consisting of liquid animal oil, vegetable oil, mineral oil, mixed oil, and synthetic oil.
